# EUROPEAN PATENT APPLICATION

(11) **EP 3 363 688 A1**
(43) Date of publication of application: **22.08.2018**
(21) Application number: 17020451.5
(22) Date of filing: 02.10.2017
(51) Int. Cl.: B60R 21/20, B60R 21/00

(54) **PORTABLE PERSONAL AIRBAG FOR AIRCRAFTS**

(30) Priority: 20.02.2017 BR 102017003385
(71) Applicant: Ciclos Time Design Eireli EEP, 88053 - 525 Florianopolis Santa Catarina (BR)
(72) Inventor: FARACO JUNIOR, Celso, Florianópolis, Santa Catarina, 88053-525 (BR)
(74) Representative: Girardi, Giovanna Paola

(57) **Abstract**

PORTABLE PERSONAL AIRBAG FOR AIRCRAFTS for the use in an air transport vehicle, such as airplanes, helicopters and others, seeking to solve the problem regarding user protection, considering its position in the chair, the space between chairs, the main protection area for the user, activation readiness, weight of the object, etc. Considering also that in cases of collision in aircrafts, the danger to life is much higher when compared to land accidents, therefore, we present the safety devices. The object of this application is an inflatable bag housed in a case manufactured with a compatible material, the format of the inflatable bag must be specific to fill the space between the passenger and the front seat, seeking to protect the head, abdomen and legs and the air bag can be empty out later by the user to be reused, only by installing another air supply unit. The airbag can provide an electronic information transmission device, via satellite, for example, with flash or compatible memory, and it can be a geolocator, for example, which is activated due to a condition established and predetermined, which can serve as a locator in searches, in case of accidents in remote places, such as the sea.

## Description

This report presents a personal airbag, preferably for using in an air transport vehicle, such as airplanes, helicopters and others, and can be easily transported and stored; it is light and compact, easy to activate, compatible for this end.

The use of airbags today is already very widespread in land transport vehicles, in order to prevent fractures of the occupants, who may collide with internal parts of the vehicle, in case of automotive collision. In addition, the world trend is this product being a mandatory item of automotive vehicles in all countries, such as Brazil and several other countries around the world. However, aircrafts, mentioning as an example the planes and helicopters, have severe shortage of personal safety equipment to collisions, mainly because the accidents involving these vehicles are usually catastrophic, which creates the need for extremely robust and complex personal safety equipment.

The patent document no. CN103845817 shows a compartment carrying a deflated air bag, which can be activated in signs of imminent danger, as its main feature is that it is compact and portable, to stay near the body in everyday life and be used by children, elderly people and during dangerous works, due to its easy use, it can be inflated by the user in case of any danger. However, its constructive configuration is not specific for use in aircrafts, since the shape of the bag is not the most appropriate for the user's protection, considering his/her position, spacing, protected areas, activation readiness, weight, etc.

Another solution already known is disclosed in document DE202004005023, in which provision the airbag is contained in a compact compartment, however, it is not intended to be used in different places. This provision allows airbags to be added in a land vehicle, fixing it in different parts of the car, and is activated by sensors arranged later in the vehicle. In other words, it is a personal and even portable airbag, however with an appeal for a vehicle accessory. It does not have specific features to be used in an aircraft.

Ratifying the weights already mentioned, the main problem associated to the mentioned above is the fact that it cannot be used in aircrafts, because it has no protection feature for that end and therefore, it would be of very low efficiency for this purpose, if compared to the severity of the collision of an aircraft, and added to the fact that such devices were not projected for use and activation in airplanes, considering the constructive setting in order to maximize its purpose regarding the user protection, considering its position in the chair, the space between the chairs, the disposition of the activation, the weight of the object, etc.

Another problem to be considered is that the collisions in aircraft present more risks to life in comparison with terrestrial accidents, therefore, the safety devices presented do not feature the robustness needed to meet these conditions both in land, air or water.

In order to present a solution that allows the use of airbags in airplanes, the object of this application has been developed, consisting of a portable product, for personal use in airplanes, in which the inflatable bag is housed in a case produced with compatible material, preferably Neoprene or another similar material, with the size approximately equal to a table laid out in the chair of a common commercial airplane. It provides for fixing straps with hook-and-loop fastening closure, popularly known as Velcro, or other compatible fixing device, provided in its fixing part with the chair, which will be specifically on the aircraft meal table; it has straps, which, associated with their size and the fact that it is produced with the compatible material, Neoprene, or other similar material, makes it portable and lightweight, being easily transported as a common purse. The principle to inflate the inflatable bag consists of any principle known at the time.

Another important feature is the shape of the inflatable bag, which must be an specific shape to fill the space between the passenger and the front seat, protecting the head, abdomen and legs due to its use applied to aircrafts, where the impact do not occur in some parts of the aircraft.

Another special feature for the purpose of use in aircraft is the fact that the air bag can be emptied later by the user to be reused, just by installing another air supply unit.

This portable personal airbag for aircraft was designed specially to the aircraft, because it considers that the collision can occur in the water, and after the activation of the airbag it will not empty out, so it could be used as a float after the exit from the aircraft; and may be also emptied and reused. Regarding the activation, it could be preferably made by the user him/herself.

The figures attached, together with the detailed description below, by ways of example and illustration of a materialization of the object developed, will provide a better understanding of the object of this report.
Figure 1 shows a perspective of the portable personal airbag in the deflated condition.
Figure 2 shows a perspective of the portable personal airbag for aircrafts in the deflated condition.
The figures 3A, 3B and 3C illustrate the potential materialization of the portable personal airbag for aircrafts, in the following conditions: 3A installed, 3B in filling process after the activation and 3C inflated.

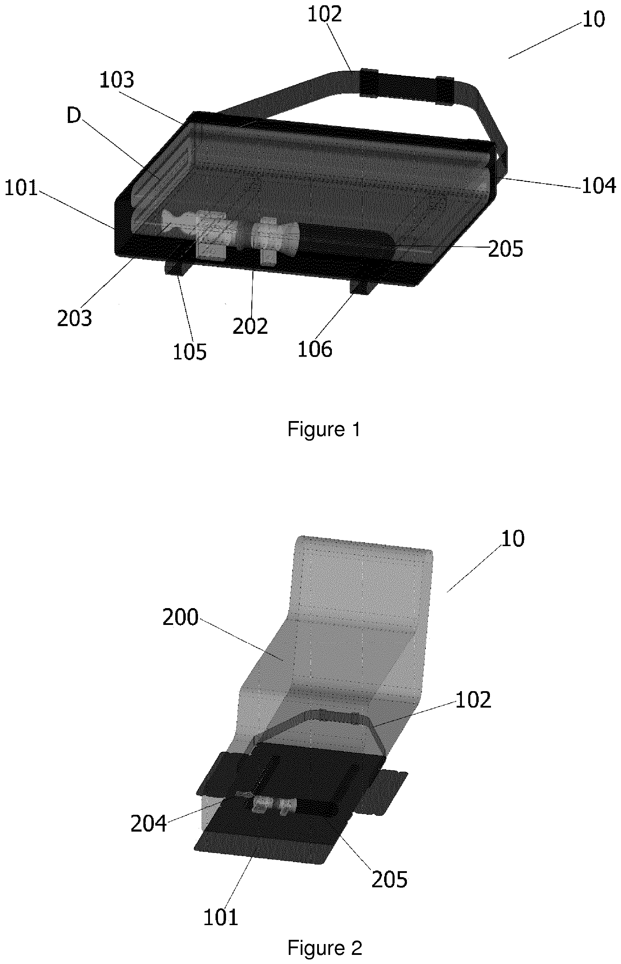

Based on the figures presented, the materialization of the airbag can be understood (10). As can be seen in Figure 1, the airbag (10) comprises a packer (101) case of at least an inflatable bag (200). The case (101) is manufactured with Neoprene, in order to be lightweight and easy to transport, this case is closed in the bottom and in the sides by an easy opening device, such as, for example, Velcro, or pressure buttons, in order to open only with the pressure exerted by the inflatable bag (200), when the airbag (10) is activated; said case (101) has preferably a rectangular format, with the sizes of the table of a commercial aircraft, making it easier for the case to be fixed in this table through two straps (105 e 106), which has a fixing device such as Velcro or something similar, facilitating even more the fixing in different supports of different aircrafts; comprising a strap (102) attached by its ends, one on each side (103 e 104).

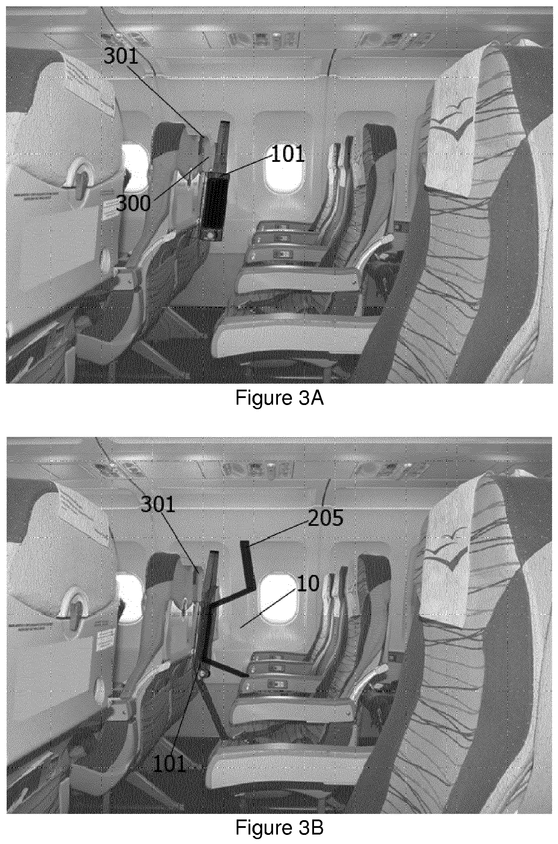

The inflatable bag (200) is housed inside the case (101), and has an appropriate volume to fill the space between the passenger and the front seat, according to figure 2, so that the side of the airbag is in line with the chair where it is fixed, it has preferably the L (L) format, the size in contact with the passenger that will activated it has preferably the format of steps (A), according to figure 3A, in order to get around the passenger's body, in addition to simplifying the fold for reuse, folding in 4 parts (D), as can be seen in figures 1 and 3B, and it has greater efficiency protecting the passenger, with a specific format to protect the head, abdomen and legs.

The internal part of the case (101) also contains the gas supply (203) unit for filling the inflatable bag (200), providing a trigger (204) with a needle (not illustrated) and at least one gas cylinder (205), in which, when the trigger (204) is activated by the user, the needle is released and pierces the seal of the gas cylinder(s) (205), and then the gas is released inflating the inflatable bag (200) of the airbag (10), remaining coupled to the supply unit (203) and inflated until the gas is released.

The gas cylinder (205) must provide a compatible content in order to the gas released in the inflatable bag (200) fill it completely, keeping it full, inflated, as well as the inflatable bag (200) provides structural resistance to remain inflated even with compression, impact and other conditions. The gas release in the internal part of the inflatable bag (200) is preferably made through a valve (not illustrated) or similar device, activated by the user him/herself. Therefore, the user has greater autonomy to choose the right time to empty it.

The airbag (10), can provide an electronic information transmission device, via satellite, for example, with flash or compatible memory, and it can be a geolocator, for example, which is activated due to a condition established and predetermined, such as for example the activation of the trigger (204); this device would serve to help searches, in case of accidents, in remote places, such as the sea. If the airplane collides with the water, it can provide its gas supply (203) unit activated by water sensor, which will be inflated automatically after the sensor activation, in case the user could not activate it, and could also be used as a float.

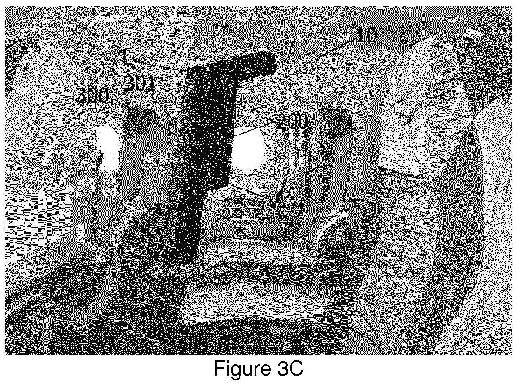

In order to present a materialization, according to figures 3A, 3B and 3C, the operation and use of the portable personal airbag (10) for aircrafts is the following: The airline company can make the airbag (10) available already positioned in the appropriate place, or the user could take the airbag (10) into the aircraft as a hand baggage, putting it in an appropriate place, fixing it into the meal table located on the back (300) of the front seat (301), through two straps (105 e 106); when there is possibility of collision of the aircraft, the commander can warn by the aircraft's radio, and the user can activate the trigger (204) manually in order to activate the airbag (10). In cases where there is no collision warning by the commander, the user, aware of the situation, can activate the airbag (10) by his/her own perception. After use, the user can empty the inflatable bag (200), which can be folded again and placed inside the case (101), and the gas cylinder(s) (205) can be replaced by a new one, and the airbag (10) can be used again.

Other materializations may exist for the same airbag (100), with respect to sizing, or shape of your case and inflatable bag, however in the same inventive concept. Thus, such changes shall not be understood as a distortion of the object presented and described in this document.

## Claims

1. "PORTABLE PERSONAL AIRBAG FOR AIRCRAFTS", such as an airbag(10) consisting in an inflatable bag(200), at least one unit of gas supply(203) unit for filling the inflatable bag(200), and one unit for housing the inflatable bag(200) and the gas supply(203) unit, **characterized by the** geometric format of the inflatable bag to get around the passenger's body and the sufficient volume to fill the space between the passenger and the front seat, and by the coupling and decoupling plugin from the gas cylinder(205) of the gas supply(203) and for comprising the gas release valve after it is inflated; and the airbag(10) also provides a case(101) closed in the bottom and in the sides through an easy opening device, and the case(101) comprises straps (105 and 106) that have a fixing device and one strap (102) attached by its ends, one on each side (103 e 104) of the case; this case also provides fixing means for the gas supply (203) unit.

2. "PORTABLE PERSONAL AIRBAG FOR AIRCRAFTS", according to claim 1, **characterized by the** airbag (10), it provides a device for geolocation and one electronic device for the remote transmission of these information, which is activated in a predetermined moment.

3. "PORTABLE PERSONAL AIRBAG FOR AIRCRAFTS", according to claim 1, **characterized by** the activation of the gas supply (203) unit by a water sensor.

4. "PORTABLE PERSONAL AIRBAG FOR AIRCRAFTS", according to claim 1, **characterized by** the side of the inflatable bag (200) that is aligned to the chair where it is fixed, with the L(L) format, and the side in touch with the passenger that activates it, with the steps(A) format.

5. "PORTABLE PERSONAL AIRBAG FOR AIRCRAFTS", according to claim 1, **characterized by** the Velcro fixing device or the button or similar device in order to detach with the inflatable bag (200) filling.
